# EUROPÄISCHE PATENTSCHRIFT

(11) **EP 3 108 950 B1**
(45) Veröffentlichungstag und Bekanntmachung des Hinweises auf die Patenterteilung: **20.02.2019**
(21) Anmeldenummer: 16020231.3
(22) Anmeldetag: 14.06.2016
(51) Int. Cl.: B01D 45/08

(54) **MATERIALABSCHEIDER**
MATERIALS SEPARATOR
SEPARATEUR DE MATERIAU

(30) Priorität: 22.06.2015 DE 202015103278 U
(43) Veröffentlichungstag der Anmeldung: 28.12.2016
(73) Patentinhaber: ESTA Apparatebau GmbH & Co. KG, 89250 Senden (DE)
(72) Erfinder: FRANK, Bernhard, 89264 Weißenhorn (DE); NOVOSEL, Michael, 89522 Heidenheim (DE); GÖRMILLER, Lisa, 89287 Bellenberg (DE)
(74) Vertreter: Meyer, Thorsten

(56) Entgegenhaltungen:
- US-A- 492 082
- US-A- 2 467 346
- US-A- 2 936 851
- US-A1- 2005 056 150

## Beschreibung

Die Erfindung betrifft einen Materialvorabscheider mit einer Eintrittsseite und einer Austrittsseite für einen partikelbelasteten Luftstrom.

Absaug- und Luftfilteranlagen für industrielle Anwendungen wie beispielsweise Werkhallen werden oft durch Partikelbelasteten Luftstrom in der Funktion beeinträchtigt. So führt ein hoher Partikelanteil zu vorschnellem Zusetzen der in solchen Absauganlagen vorgesehenen Filter. Zudem ist gerade bei mit Schweißrauch belasteter Luft problematisch, dass diese noch heiße oder glühende Partikel und Teilchen enthalten kann, welche zu einem Abbrand des Filters oder dem Luftstrom ausgesetzten Teilen wie Schläuche oder dergleichen der Anlage führen können.

Wünschenswert wäre es bei den von der Bauform her möglichst platzsparend konstruierten Absauganlagen eine effektivere und selektive Ausscheidung von Partikeln durch einen Materialvorabscheider zu ermöglichen.

Aus der DE OS 25 33 827 ist eine Vorrichtung zum Abscheiden von Flüssigkeitstropfen und/oder Feststoffpartikeln aus einem Gasstrom bekannt, bei dem untereinander angeordnete Bleche an ihren jeweils unteren Kanten Fangrinnen aufweisen.

Aus der EP 2 363 190 A1 ist ein Abgasfilter bekannt, bei dem mehrere versetzt zueinander angeordnete geformte Bleche einen Luftstrom verwirbeln und dadurch ein Abscheiden von Partikeln ermöglichen soll.

Aus der FR 2 778 580 ist ein Filter bekannt, bei dem Luftstrombleche angeordnet sind, welche an ihren oberen Kanten rinnenförmig umgeschlagen sind.
Aus der JP 03146108 A ist ein Rauchabscheidegerät bekannt, in dessen Luftstrom versetzt übereinander Bleche angeordnet sind, welche den Luftstrom formen. Die US2936851 offenbart einen Luftreiniger, in dessen Zuluftöffnung horizontal verlaufende und übereinander angeordnete Lamellen angebracht sind, die in unterschiedlichen Winkellagen verlaufen. Aufgabe der Erfindung ist es daher einen Partikelfilter für Absauganlagen zur Verfügung zu stellen, bei dem eine einfache und kompakte Konstruktion eine möglichst effektive Selektion von Partikeln ermöglicht.
Diese Aufgabe wird durch einen Materialvorabscheider nach den Merkmalen des Anspruchs 1 gelöst.
Erfindungsgemäß ist ein Materialvorabscheider mit einer Eintrittsseite und einer Austrittsseite für einen partikelbelasteten Luftstrom, mit mehreren vertikal übereinander angeordneten streifenförmigen Abscheideelementen, vorgeschlagen, der sich dadurch auszeichnet, dass die Abscheideelemente von oben nach unten zunächst mit einem ansteigenden positiven Winkel gegen die Vertikale angeordnet sind und wenigstens ein unteres Abscheideelement in einem negativen Winkel gegen die Vertikale aufweist. Hierdurch ist auf besonders effektive Weise die hohe selektive Auslese von Partikeln ermöglicht.
Durch die Anordnung der Abscheideelemente wird der Luftvolumenstrom gezielt abgelenkt. Dadurch wird eine Trennung der Fraktionen (Luft und darin enthaltene Partikel) erreicht. Dies hat zur Folge, dass der Luftstrom gereinigt wird. Bevorzugterweise weist wenigstens eins der Abscheideelemente an seiner unteren Kante eine sich zur Austrittsseite öffnende untere Rinne auf. Dem folgend weist ebenso bevorzugterweise wenigstens eins der Abscheideelemente an seiner oberen Kante eine obere Rinne auf, die zur Eintrittsseite hin sich öffnet. Von Vorteil sind die Winkel der Anstellung der Abscheideelemente (2, 3 und 4) zur Vertikalen zwischen 21° bis 31°, sowie zwischen 31° bis 41° und sowie zwischen -7° bis -13° gewählt.

Die Erfindung sieht vor, dass die Abscheideelemente von der Eintrittsseite her gesehen mit einem Überlapp hinter und untereinander angeordnet sind.
Eine Variante der Erfindung sieht vor, dass zwei Abscheideelemente mit dem gleichen Anstellwinkel gegen die Vertikale übereinander angeordnet sind.

Der Materialvorabscheider wird an der Eintrittsseite von vorne und/oder von oben angeströmt.
Von Vorteil sind die Abscheideelemente durch Bleche gebildet. Eine besonders vorteilhafte Ausgestaltung der Erfindung sieht vor, dass sich die Öffnungsweite der unteren Kante der Abscheideelemente gegen eine gemeinsame Vertikale von oben her gesehen von Abscheideelement zu Abscheideelement verringert und sich beim untersten Abscheideelement wieder weitet.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Seitenansicht eines erfindungsgemäßen Materialvorabscheiders,
- Fig. 2: den Materialvorabscheider aus Fig. 1 mit Blickrichtung von vorne auf die Eintrittsseite,
- Fig. 3: einen schematische Darstellung der Öffnungsweiten der unteren Enden der Abscheideelemente gegen eine gemeinsame Vertikale, und
- Fig. 4: eine schematische Darstellung des Luftstroms durch den Materialvorabscheider von Eintritts- nach Austrittsseite.

Die in den Figuren gleichen Bezugsziffern bezeichnen gleiche oder gleich wirkende Elemente.

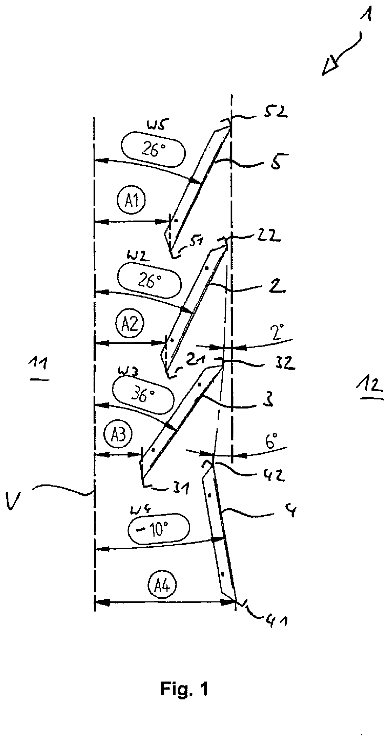

In Fig. 1 ist eine Seitenansicht eines Materialvorabscheiders 1 für einen partikelbelasteten Luftstrom gezeigt, der den Materialvorabscheider 1 von einer Eintrittsseite 11 zu einer Austrittsseite 12 durchströmen kann.

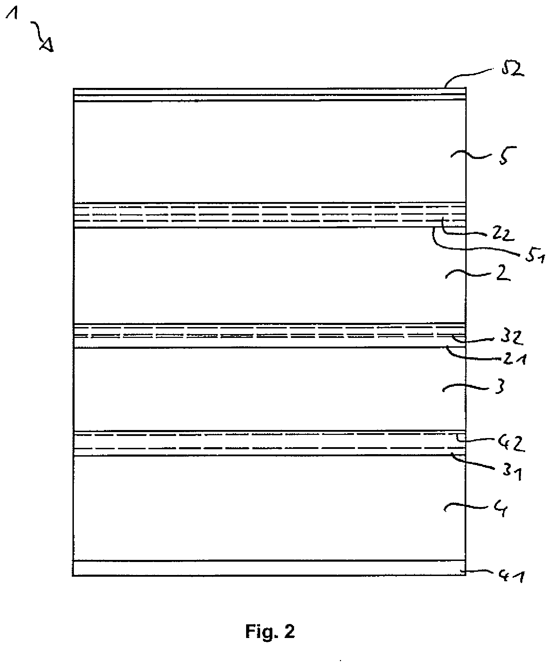

Dabei sind Abscheideelemente 5, 2, 3, 4 - im Beispiel durch Bleche gebildet - vertikal übereinander angeordnet. Die Abscheideelemente 5, 2, 3, 4 sind streifenförmig ausgebildet und von der Eintrittsseite 11 her gesehen mit einem Überlapp hinter und untereinander angeordnet (siehe hierzu auch Fig. 2).

Die Abscheideelemente 2, 3 und 4 bilden die zentrale Gruppe des Materialvorabscheiders. Die Abscheideelemente 2, 3 sind von oben nach unten zunächst mit einem ansteigenden positiven Winkel W2,W3 gegen die Vertikale V angeordnet und ein unteres Abscheideelement 4 weist in einem negativen Winkel W4 gegen die Vertikale V auf.

Die Winkel der Anstellung der Abscheideelemente 2, 3 und 4 zur Vertikalen sind dabei im Beispiel zu 26°, 36° und -10° gewählt worden. Diese Winkel haben sich als sehr effektiv in Versuchen gezeigt.

Im gezeigten Beispiel ist zusätzlich ein Abscheideelement 5 mit dem gleichen Anstellwinkel gegen die Vertikale über dem darunter angeordnetem Abscheideelement 2 vorgesehen worden.

Die Abscheideelemente 2, 3, 4, 5 weisen an seiner unteren Kante eine sich zur Austrittsseite 12 öffnende untere Rinne 21, 31, 41, 51 auf. Ebenfalls weisen die Abscheideelemente 2, 3, 4, 5 an ihrer oberen Kante eine obere Rinne 22, 32, 42, 52 auf, die zur Eintrittsseite 11 hin sich öffnet.

Durch die am Ende der Abscheideelemente befindlichen Kantungen oder Rinnen, die sich in horizontaler und vertikaler Richtung auch überschneiden, entstehen weitere positive Effekte. Zum einen können harte Abrisskanten vermieden werden, da sich am unteren Ende der Bleche die Luft an die Kantung "anschmiegen" kann. Dies verbessert die Umlenkung.

Am oberen Ende der Abscheideelemente wird durch die Kantung die Luft zu einer erneuten Umlenkung gezwungen, was wiederum dazu führt, dass weitere Partikel abgeschieden werden können.

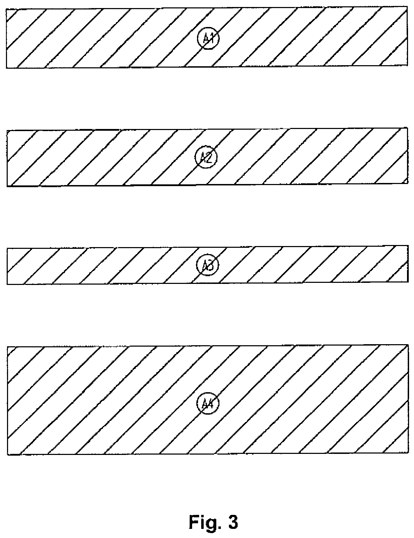

In Fig. 3 ist entsprechend Fig. 1 verdeutlicht, dass sich die Öffnungsweite A1 bis A3 der unteren Kante der Abscheideelemente 5, 2, 3, 4 gegen eine gemeinsame Vertikale V von oben her gesehen von Abscheideelement zu Abscheideelement 5, 2, 3 verringert und sich beim untersten Abscheideelement 4 wieder weitet (A4).

Durch die Kombination von Querschnittsverengung und Querschnittserweiterung entsteht eine Art Sichtereffekt. Dieser ist am untersten Blech am ausgeprägtesten. Zudem wird durch die Stellung des untersten Bleches weitestgehend verhindert, dass bereits abgeschiedenes Material wieder in den Luftvolumenstrom zurückgeführt wird.

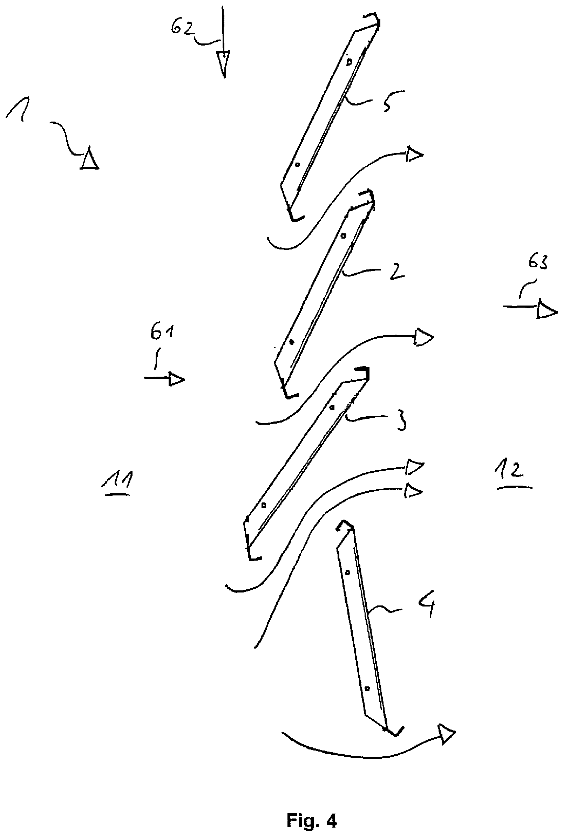

Fig. 4 zeigt nochmals den Luftstromweg von der Ansaugung an der Eintrittsseite 11 von vorne 61 und hauptsächlich von oben 62 und den Ausstoß 63 an der Austrittsseite 12. Durch die Umlenkung an den Abscheideelementen 5, 2, 3, 4 und den Richtungswechsel von vertikal von oben nach horizontal zum Ausstoß werden vom kommenden Luftstrom 61, 62 mitgeführte Partikel gut vor und am Materialvorabscheider 1 abgetrennt.

### Bezugszeichenliste

- 1: Materialvorabscheider

- 11: Eintrittsseite
- 12: Austrittsseite

- 2: Abscheideelement
- 21: untere Rinne
- 22: obere Rinne

- 3: Abscheideelement
- 31: untere Rinne
- 32: obere Rinne

- 4: Abscheideelement
- 41: untere Rinne
- 42: obere Rinne

- 5: Abscheideelement
- 51: untere Rinne
- 52: obere Rinne

- 61: Anströmung von vorne
- 62: Anströmung von oben
- 63: Ausstoß

- A1 bis A4: Öffnungsweite
- Wi: Winkel des Abscheideelements gegen die Vertikale
- V: Vertikale

## Patentansprüche

1. Materialvorabscheider (1) mit einer Eintrittsseite (11) und einer Austrittsseite (12) für einen partikelbelasteten Luftstrom, mit mehreren vertikal übereinander und horizontal angeordneten streifenförmigen Abscheideelementen (2, 3, 4),
wobei dieser an der Eintrittsseite (11) von vorne (31) und/oder von oben (32) angeströmt wird,
wobei der Luftstrom senkrecht zur Vertikalen und gegen die übereinander und horizontal angeordneten streifenförmigen Abscheideelemente (2, 3, 4) geführt ist,
**dadurch gekennzeichnet,**
**dass** die Abscheideelemente (2, 3) von oben nach unten übereinander angeordnet zunächst mit einem ansteigenden positiven Winkel (W2,W3) gegen die Vertikale (V) angeordnet sind und wenigstens ein unteres Abscheideelement (4) in einem negativen Winkel (W4) gegen die Vertikale (V) angeordnet ist,
wobei die Abscheideelemente (2, 3, 4, 5) von der Eintrittsseite (11) her gesehen mit einem Überlapp hinter und untereinander angeordnet sind.

2. Materialvorabscheider nach Anspruch 1,
**dadurch gekennzeichnet,**
**dass** wenigstens eins der Abscheideelemente (2, 3, 4, 5) an seiner unteren Kante eine sich zur Austrittsseite (12) öffnende untere Rinne (21, 31, 41, 51) aufweist.

3. Materialvorabscheider nach Anspruch 1 oder 2,
**dadurch gekennzeichnet,**
**dass** wenigstens eins der Abscheideelemente (2, 3, 4, 5) an seiner oberen Kante eine obere Rinne (22, 32, 42, 52) aufweist, die zur Eintrittsseite (11) hin sich öffnet.

4. Materialvorabscheider nach Anspruch 1, 2 oder 3,
**dadurch gekennzeichnet,**
**dass** die Winkel der Anstellung der Abscheideelemente (2, 3 und 4) zur Vertikalen zwischen 21° bis 31°, sowie zwischen 31° bis 41° und sowie zwischen -7° bis -13° gewählt sind.

5. Materialvorabscheider nach einem der Ansprüche 1 bis 4,
**dadurch gekennzeichnet,**
**dass** zusätzlich zwei Abscheideelemente (2, 5) mit dem gleichen Anstellwinkel gegen die Vertikale übereinander angeordnet sind.

6. Materialvorabscheider nach einem der Ansprüche 1 bis 5
**dadurch gekennzeichnet,**
**dass** die Abscheideelemente (2, 3, 4, 5) durch Bleche gebildet sind.

7. Materialvorabscheider nach einem der Ansprüche 1 bis 6
**dadurch gekennzeichnet,**
**dass** sich die Öffnungsweite (A1 bis A3) der unteren Kante der Abscheideelemente gegen eine gemeinsame Vertikale (V) von oben her gesehen von Abscheideelement zu Abscheideelement (5, 2, 3) jeweils Zwischen den benachbarten Paaren von Abscheideelementen verringert und sich beim untersten Abscheideelement (4) wieder weitet (A4).

## Claims

1. A material pre-separator (1) having an inlet side (11) and an outlet side (12) for a particle-laden air flow, with a plurality of strip-shaped separating elements (2, 3, 4) which are vertically stacked above one another and arranged horizontally,
wherein said pre-separator is flowed against at the inlet side (11) from the front (31) and/or from above (32),
wherein the air flow is guided perpendicular to the vertical and against the strip-shaped separating elements (2, 3, 4), which are stacked and arranged horizontally, **characterised**
**in that** the separating elements (2, 3) are arranged from top to bottom, initially with a rising positive angle (W2, W3) against the vertical (V) and has at least one lower separating element (4) at a negative angle (W4) against the vertical (V), whereas the separating elements (2, 3, 4, 5) are arranged behind and below one another with an overlap, viewed from the inlet side (11).

2. A material pre-separator according to claim 1,
**characterised in**
**that** at least one of the separating elements (2, 3, 4, 5) has at its lower edge a lower channel (21, 31, 41, 51) opening to an outlet side (12).

3. A material pre-separator according to claim 1 or 2,
**characterised in**
**that** at least one of the separating elements (2, 3, 4, 5) has at its upper edge an upper channel (32, 42, 52, 11) opening to an inlet side (11).

4. A material pre-separator according to claim 1, 2 or 3,
**characterised in**
**that** the angles of the position of the separating elements (2, 3 and 4) are selected between 21° and 31°, and between 31° and 41° as well as between -7° and -13° with respect to the vertical.

5. A material pre-separator according to one of claims 1 to 4,
**characterised in**
**that** additionally two separating elements (2, 5) are arranged one above the other at the same angle of attack against the vertical.

6. A material pre-separator according to one of claims 1 to 5,
**characterised in**
**that** the separating elements (2, 3, 4, 5) are formed by metal sheets.

7. A material pre-separator according to one of claims 1 to 6,
**characterised in**
**that** the opening width (A1 to A3) of the lower edge of the separating elements tapers (A4) against a common vertical (V), seen from the top, from one separating element to another separating element (5, 2, 3 and then expands again at the lowermost separating element (4).

## Revendications

1. Pré-séparateur de matériau (1) ayant un côté entrée (11) et un côté sortie (12) pour un écoulement d'air chargé de particules, avec une pluralité d'éléments de séparation en forme de bande (2, 3, 4) qui sont verticalement empilés les uns sur les autres et disposés horizontalement,
dans laquelle cet écoulement s'effectue par l'avant (31) et/ou par le haut (32) du côté de l'entrée (11),
dans lequel l'écoulement d'air est guidé perpendiculairement à la verticale et par rapport aux éléments en forme de bandes de sépa-ration (2, 3, 4), qui sont empilées et disposées horizontalement, **caractérisé**
**en ce que** les éléments de séparation (2, 3) sont disposés de haut en bas, initialement avec un angle positif croissant (W2, W3) contre la verticale (V) et comporte au moins un élément de séparation infé-rieur (4) avec un angle négatif (W4) par rapport à la verticale (V), tandis que les éléments de séparation (2, 3, 4, 5) sont disposés les uns derrière les autres et en-dessous les uns des autres avec un chevauchement, vu du côté entrée (11).

2. Pré-séparateur de matériau selon la revendication 1,
caractérisé en
qu'au moins l'un des éléments de séparation (2, 3, 4, 5) présente à son bord inférieur un canal inférieur (21, 31, 41, 51) débouchant sur un côté sortie (12).

3. Pré-séparateur de matériau selon les revendications 1 ou 2,
caractérisé en
qu'au moins l'un des éléments de séparation (2, 3, 4, 5) présente à son bord supérieur un canal supérieur (32, 42, 52, 11) débouchant sur un côté entrée (11).

4. Pré-séparateur de matériau selon les revendications 1, 2 ou 3,
**caractérisé en**
**ce que** les angles de la position du éléments de séparation (2, 3 et 4) sont choisis entre 21° et 31° et entre 31° et 41° ainsi qu'entre -7° et -13° par rapport à la verticale.

5. Pré-séparateur de matériau selon l'une des revendications 1 à 4,
caractérisé en
qu'en outre deux éléments de séparation (2, 5) sont disposés les uns au-dessus des autres au même angle d'attaque par rapport à la verticale.

6. Pré-séparateur de matériau selon l'une des revendications 1 à 5,
**caractérisé en**
**ce que** les éléments de séparation (2, 3, 4, 5) sont formés par des tôles métalliques.

7. Pré-séparateur de matériau selon l'une des revendications 1 à 6,
**caractérisé en**
**ce que** la largeur d'ouverture (A1 à A3) du bord inférieur des éléments de séparation se rétrécit (A4) par rapport à une verticale commune (V), vue de dessus, d'un élément de séparation à un autre élément de séparation (5, 2, 3, puis se dilate à nouveau au niveau de l'élément de séparation le plus bas (4).
